# EUROPÄISCHE PATENTANMELDUNG

(11) **EP 3 483 429 A1**
(43) Veröffentlichungstag der Anmeldung: **15.05.2019**
(21) Anmeldenummer: 17201253.6
(22) Anmeldetag: 13.11.2017
(51) Int. Cl.: F03D 13/20, E04H 12/08, E04H 12/34, F03D 13/10

(54) **VERFAHREN UND SYSTEM ZUM MONTIEREN EINER TURMSEKTION FÜR EINE WINDENERGIEANLAGE**

(71) Anmelder: Nordex Energy GmbH, 22419 Hamburg (DE)
(72) Erfinder: Derksen, Juri, 32427 Minden (DE)
(74) Vertreter: Garrels, Sabine

(57) **Zusammenfassung**

Die Erfindung betrifft ein Verfahren zum Montieren einer längsgeteilten Turmsektion (1) für einen Turm einer Windenergieanlage in im Wesentlichen horizontaler Ausrichtung, wobei die Turmsektion aus wenigstens drei Sektionssegmenten (3) gebildet wird, jeweils umfassend zwei stirnseitige Ringflanschsegmente (14) und zwei Längsprofile (13) an den Längsseiten zum Verbinden benachbarter Sektionssegmente (3). Weiterhin betrifft die Erfindung ein System zur Durchführung des Verfahrens.

## Beschreibung

Die Erfindung betrifft das Montieren von Turmsektionen für Türme von Windenergieanlagen. Die erfindungsgemäße Lösung betrifft ein Verfahren zur liegenden Montage von längsgeteilten Turmsektionen und das zur Durchführung des Verfahrens erforderliche System von Montagevorrichtungen.

Mit zunehmendem Bedarf an Windenergieanlagen mit höherer Leistung und somit größeren Abmessungen der Hauptkomponenten, wie Turm, Gondel und Rotorblätter, wurden die zulässigen Grenzen für Fahrzeugabmessungen, insbesondere die maximale Höhe von rund 4 Metern erreicht. Auch die durch die logistische Infrastruktur gegebenen Grenzen, z.B. lichte Höhe unter Brücken, machen es erforderlich, Turmsektion mit mehr als vier Metern Durchmesser in ihrer Längserstreckung in Segmente zu teilen. Somit werden Sektionssegmente eines Turms im Herstellerwerk vorkonfektioniert und erst am Errichtungsort zusammengebaut. Es sind verschiedene Montagekonzepte am Errichtungsort bekannt.

Die WO 2012/007226 A2 offenbart beispielsweise eine Montagevorrichtung für die Montage eines Windturbinenturms mit einem vertikal ausgerichteten Mast, mit welchem ein oder mehrere horizontal ausgerichtete Ausleger verbunden sind. Die Ausleger tragen eine Plattform oder einen Hubarbeitskorb. Weiterhin ist ein Ausleger an seinem distalen Ende mit Haltemitteln verbunden, welche ein Turmbausegment halten. Der Turmabschnitt wird um den vertikal ausgerichteten Mast herum gebaut.

Die WO 2015/158351 A1 offenbart einen Stahlturm für eine Windenergieanlage, der eine Anzahl von zylindrischen oder konischen Turmsektionen umfasst, wobei zumindest seine breiteren Sektionen in zwei oder mehr längliche Sektionssegmente unterteilt sind, die sich mittels vertikaler Flansche, die aneinander durch eine Vielzahl von Bolzen befestigt sind, zu einer vollständigen Turmsektion vereinigen, wobei die Sektionssegmente zudem obere und untere horizontale Ringflanschsegmente aufweisen, um eine Verbindung der Turmsektionen aufeinander zu ermöglichen. Für den Transport der Sektionssegmente sind dort Träger vorgesehen, die jeweils mit einem Ringflanschsegment verschraubt sind, wobei zum Lagern der Sektionssegmente diese derart übereinander gestapelt sind, dass die Träger unmittelbar aufeinander liegen.

In der DE 102011076648 A1 wird ein Verfahren zum Errichten einer Windkraftanlage mit einem Fundament und einem Turmbauwerk beschrieben, wobei zumindest ein erster Abschnitt des Turmbauwerks aus Fertigteilen auf einem Fundament erstellt wird. Über ein Kopflagerelement und ein Fußlagerelement des Fundaments werden die Fertigteile miteinander verbunden. Nach dem Verbinden der Fertigteile des ersten Abschnitts wird ein Turmdrehkran an dem Kopflagerelement horizontal verankert und anschließend ein zweiter Abschnitt des Turmbauwerks mit Hilfe eines Turmdrehkrans montiert.

### Darstellung der Erfindung

Die Aufgabe der Erfindung ist es, die Komplexität der Montage zu vereinfachen, insbesondere ist für die Errichtung von mehreren Windenergieanlagen in einem Windenergieanlagenpark die Anzahl großer und somit teurer Kräne zu reduzieren. Die Montage der Turmsektionen soll sicherer und rationeller gestaltet werden.

Die Aufgabe wird gelöst durch ein Verfahren zum Montieren einer längsgeteilten Turmsektion für einen Turm einer Windenergieanlage in im Wesentlichen horizontaler Ausrichtung, wobei die Turmsektion aus wenigstens drei Sektionssegmenten gebildet wird, die jeweils zwei stirnseitige Ringflanschsegmente und zwei Längsprofile an den Längsseiten zum Verbinden benachbarter Sektionssegmente umfassen, mit den Schritten:
- Bereitstellen von wenigstens zwei Montageböcken, die jeweils wenigstens eine antreibbare Rolle aufweisen, und einer Mehrzahl von längenveränderbaren Streben und/oder Stützmitteln und Bereitstellen von wenigstens drei Sektionssegmenten, vorzugsweise mit stirnseitig montierten Anschlagmitteln, insbesondere Transporttraversen,
- Positionieren und paralleles Ausrichten der Montageböcke derart, dass der Abstand der Montageböcke dem Abstand der stirnseitigen Ringflanschsegmente bzw. der Segmentlänge entspricht,
- Verbringen des ersten Sektionssegments mittels wenigstens eines Hubmittels in im Wesentlichen waagerechter Ausrichtung mit der konvexen Seite nach unten gerichtet von einem Lagerplatz oder einem (ersten) Transportfahrzeug auf die Montageböcke, wobei das oder jedes Hubmittel bevorzugt als mobiler Teleskopkran oder Schwerlaststapler ausgebildet ist,
- Montieren von Führungsplatten an den Ringflanschsegmenten,
- Verbringen des zweiten Sektionssegments mittels des Hubmittels oder der Hubmittel in waagerechter Ausrichtung mit der konvexen Seite nach oben gerichtet von einem Lagerplatz oder einem (zweiten) Transportfahrzeug oberhalb des ersten Sektionssegments, wobei die Längsseiten des zweiten und des ersten Sektionssegments übereinander und im Wesentlichen fluchtend ausgerichtet sind,
- Absenken und Einfädeln des zweiten Sektionssegments zwischen die Führungsplatten des ersten Sektionssegments,
- weiteres Absenken des zweiten Sektionssegments und Einfädeln der Positionier- und Fixiermittel an einer ersten Längsseite des zweiten Sektionssegments in die Positionier- und Fixiermittel der benachbarten Längsseite des ersten Sektionssegments,
- Anschlagen jeweils eines längenveränderbaren und klappbaren Stützmittels in zusammengeklappter Stellung an der den Positionier- und Fixiermittel gegenüberliegenden zweiten Längsseite des ersten und des zweiten Sektionssegments, insbesondere an den stirnseitigen Ringflanschsegmenten,
- Anheben der zweiten Längsseite des zweiten Sektionssegments und gleichzeitiges Ausklappen der längenveränderbaren und klappbaren Stützmittel bis in eine Einraststellung,
- Drehen der antreibbaren Rollen der Montageböcke um ca. 60°, nämlich bis die jeweils zweite Längsseite des ersten und des zweiten Sektionssegments in einer gemeinsamen horizontalen Ebene liegen und eine nach oben offene Teilsektion bilden,
- Verbinden, insbesondere Verschrauben der Längsprofile der ersten Längsseite des ersten und zweiten Sektionssegments, bevorzugt in der 6-Uhr-Position,
- Verbringen des dritten (bzw. letzten) Sektionssegments mittels des Hubmittels oder der Hubmittel in im Wesentlichen waagerechter Ausrichtung mit der konvexen Seite nach oben gerichtet von einem Lagerplatz oder einem (dritten) Transportfahrzeug oberhalb der nach oben offenen Teilsektion,
- Absenken und Einfädeln des dritten (bzw. letzten) Sektionssegments zwischen die Führungsplatten des ersten Sektionssegments und des zweiten Sektionssegments,
- weiteres Absenken des dritten (bzw. letzten) Sektionssegments und Einfädeln der Positionier- und Fixiermittel an beiden Längsseiten des dritten (bzw. letzten) Sektionssegments in die Positionier- und Fixiermittel der benachbarten Längsseite des ersten und des zweiten Sektionssegments,
- Sichern der Positionier- und Fixiermittel und
- Verbinden, insbesondere Verschrauben der Längsprofile des dritten Sektionssegments mit den Längsprofilen der zweiten Längsseiten des ersten und des zweiten Sektionssegments.

Eine bevorzugte Fortbildung des Verfahrens umfasst die weiteren Schritte:
- Montieren und Einstellen der längenveränderbaren Streben an direkt gegenüberliegenden Längsprofilen des ersten Sektionssegments, derart, dass der Abstand der Längsprofile einem vorbestimmten Maß entspricht,
- Montieren und Einstellen einer Mehrzahl von längenveränderbaren Streben an direkt gegenüberliegenden Längsprofilen des zweiten Sektionssegments, so dass der Abstand der Längsprofile dem vorbestimmten Maß entspricht, und Montieren und Einstellen einer Mehrzahl von längenveränderbaren Streben an direkt gegenüberliegenden Längsprofilen des dritten Sektionssegments, so dass der Abstand der Längsprofile dem vorbestimmten Maß entspricht. Das Einstellen der längenveränderbaren Streben auf ein vorbestimmtes Maß stellt auf besonders einfache Weise sicher, dass die Längsprofile jedes Sektionssegments mit hoher Genauigkeit parallel verlaufen und der Einsatz von zusätzlichen Ausrichtwerkzeugen verzichtbar ist. Der vorgenannte Verfahrensschritt, Montieren und Einstellen einer Mehrzahl von längenveränderbaren Streben, kann am Errichtungsort oder bereits im Herstellerwerk erfolgen.

Vorzugsweise umfasst das Verfahren die weiteren Schritte:
Eingeben und/oder Abrufen der für den vorbestimmten Abstand relevanten Parameterwerte an einem lokalen Steuer- und/oder Regelgerät der oder jeder längenveränderbaren Strebe zum motorischen Einstellen des vorbestimmten Abstands. Mit diesen Schritten wird eine noch höhere Genauigkeit erzielt. Zudem erfolgt das Einstellen reproduzierbar und in kürzerer Zeit.

In einer besonders bevorzugten Weiterbildung der Erfindung weist das Verfahren die zusätzlichen Schritte auf:
- Eingeben und/oder Abrufen der für den vorbestimmten Abstand relevanten Parameterwerte der oder jeder längenveränderbaren Strebe an einer zentralen Bedien- und Anzeigeeinheit einer zentralen Steuerungseinheit,
- insbesondere drahtloses Übertragen der Daten von der zentralen Steuerungseinheit an die lokalen Steuer- und/oder Regelgeräte der längenveränderbaren Streben und
- Starten der Antriebe der längenveränderbaren Streben von der zentralen Bedien- und Anzeigeeinheit zum, insbesondere simultanen, motorischen Einstellen der vorbestimmten Abstände.

Mit den vorgenannten Schritten wird ebenfalls eine größere Genauigkeit und Reproduzierbarkeit erzielt. Zudem erfolgt das ferngesteuerte Einstellen schneller und mit größerer Sicherheit für das Montagepersonal.

Bei einer weiteren bevorzugten Weiterbildung des erfindungsgemäßen Verfahrens umfasst der Schritt "Anheben der zweiten Längsseite des zweiten Sektionssegments und gleichzeitiges Ausklappen der klapp- und längenveränderbaren Stützmittel" die zusätzlichen Schritte:
- Eingeben und/oder Abrufen der für das Anheben und/oder das Ausklappen und/oder den vorbestimmten Abstand relevanten Parameterwerte an einer zentralen Bedien- und Anzeigeeinheit einer zentralen Steuerungseinheit,
- drahtloses Übertragen der Daten von der zentralen Steuerungseinheit an die lokalen Steuer- und/oder Regelgeräte der klappbaren und längenveränderbaren Stützmittel und
- Starten der Antriebe der klappbaren und längenveränderbaren Stützmittel von der zentralen Bedien- und Anzeigeeinheit zum, insbesondere simultanen, motorischen Anheben bzw. Ausklappen und/oder Einstellen.

Mit den vorgenannten Schritten wird ebenfalls eine höhere Genauigkeit und Reproduzierbarkeit erzielt, zudem erfolgt das ferngesteuerte Einstellen schneller. Für die Monteure ist ein sicheres Arbeiten gegeben. Weiterhin ist das Montieren der Turmsektion in der vorgenannten Phase von einer Kranverfügbarkeit unabhängig.

Bei einer Weiterbildung des erfindungsgemäßen Verfahrens erfolgt der Schritt "Anheben der zweiten Längsseite des zweiten Sektionssegments und gleichzeitiges Ausklappen der längenveränderbaren und klappbaren Stützmittel bis in eine Einraststellung" durch das oder die Hubmittel, nämlich einen Kran und/oder einen Schwerlaststapler, und das Ausklappen der klappbaren und längenveränderbaren Stützmittel geschieht somit passiv.

Bei einer bevorzugten Weiterbildung des erfindungsgemäßen Verfahrens erfolgt der Schritt "Anheben der zweiten Längsseite des zweiten Sektionssegments und gleichzeitiges Ausklappen der längenveränderbaren und klappbaren Stützmittel bis in eine Einraststellung" mittels eines eigenen Antriebs durch die klappbaren und längenveränderbaren Stützmittel selbst.

Besonders bevorzugt weist das Verfahren die weiteren Schritte zum Abschließen der Montage jeder Turmsektion auf:
- Demontieren der Führungsplatten,
- Demontieren der längenveränderbaren und klappbaren Stützmittel,
- Demontieren der längenveränderbaren Streben und
- Transportieren der fertiggestellten Turmsektion zu einem Errichtungs- oder Lagerplatz

Die Aufgabe wird auch gelöst durch ein System zum Montieren einer längsgeteilten Turmsektion für einen Turm einer Windenergieanlage, welche aus wenigstens zwei Sektionssegmenten gebildet wird oder ist, umfassend
- wenigstens zwei Montageböcke, wobei die Montageböcke jeweils einen mechanischen, elektrischen oder hydraulischen Rollenantrieb zum Antreiben wenigstens einer Rolle aufweisen,
- wenigstens zwei längenveränderbare Streben, die mit einem Sektionssegment verbindbar sind, wobei die wenigstens zwei längenveränderbaren Streben jeweils einen mechanischen und/oder elektrischen Antrieb zum Variieren der wirksamen Länge der Streben aufweisen,
- wenigstens zwei temporäre Stützmittel zwischen zwei Sektionssegmenten, wobei die wenigstens zwei Stützmittel jeweils einen Antrieb zum Variieren der wirksamen Länge der Stützmittel aufweisen, und
- wenigstens vier Führungsplatten und wenigstens zwei Positionier- und Fixiermittel zum Herstellen einer scharnierartigen Verbindung zwischen zwei Sektionssegmenten.

In einer vorteilhaften Weiterbildung der Erfindung umfasst jedes System zwei längenveränderbare Stützmittel, welche bevorzugt als klappbare Stützmittel ausgeführt sind. Jedes Stützmittel ist dazu in zwei Abschnitte geteilt, welche durch ein Scharniergelenk verbunden sind. Die Abschnitte sind insbesondere rohrförmig, wobei der erste Abschnitt als Stützrohr und der zweite Abschnitt als Führungsrohr für den Antrieb ausgebildet ist.

In einer besonders bevorzugten Weiterbildung der Erfindung umfassen die Antriebe der längenveränderbaren Streben und/oder Stützmittel jeweils einen Motor, ein Getriebe, oder einen Getriebemotor, eine Gewindespindel und wenigstens einen Sensor. Die Antriebe der längenveränderbaren Streben und/oder Stützmittel weisen jeweils ein, insbesondere fernsteuerbares, Steuer- und/oder Regelgerät auf, das mit einer Steuerungseinheit, insbesondere drahtlos verbindbar ist.

In einer besonders vorteilhaften Weiterbildung der Erfindung weist die Steuerungseinheit eine Bedien- und Anzeigeeinheit auf und/oder ist mit einer Bedien- und Anzeigeeinheit verbindbar. Die Steuerungseinheit steht in Wirkverbindung mit den Steuer- und/oder Regelgeräten, um wenigstens zwei längenveränderbare Streben und/oder Stützmittel einzeln, separat oder gemeinsam simultan, insbesondere synchron einzustellen und zu positionieren. Hierdurch ist eine individuelle Ansteuerung der Streben und/oder Stützmittel zur Längenveränderung ermöglicht, ohne dass sich das Montagepersonal in einen Gefahrenbereich bewegen muss.

Die erfindungsgemäßen Montageböcke umfassen jeweils wenigstens zwei, vorzugsweise vier Rollensätze mit jeweils mindestens zwei, vorzugsweise wenigstens vier Rollen, die auf einer gemeinsamen Achse oder Welle gelagert sind, wobei zumindest eine Achse oder Welle eines Rollensatzes schwenkbar ausgeführt ist, sodass der Abstand zu einer parallelen zweiten Achse oder Welle eines zweiten Rollensatzes veränderbar ist. Hierdurch ist es auf einfache Weise möglich, die Montageböcke an verschiedene Durchmesser der Turmsektionen anzupassen sowie Unebenheiten des Bodens auszugleichen.

In einer besonders vorteilhaften Weiterbildung der Erfindung bestehen die wenigstens zwei Positionier- und Fixiermittel im Wesentlichen jeweils aus einem Gabelelement und einem Stegsegment, die separat mit jeweils einem Sektionssegment kraftschlüssig und/oder formschlüssig verbindbar sind. Das Gabelelement weist eine Bohrung mit einem Schlitz auf und das Stegelement weist einen Steg auf. Die Breite des Schlitzes ist dabei größer als die Breite bzw. die kürzere Kantenlänge und kleiner als die Höhe bzw. die größere Kantenlänge des Steges. Die Bohrung in dem Gabelelement ist wiederum geringfügig größer als die Höhe bzw. die größere Kantenlänge des Stegs des Stegelements. Hierdurch ist ein loses, zugleich sicheres Verbinden von zwei Sektionssegmenten gegeben, wobei zudem das Einfädeln sicher und einfach möglich ist.

Aus dem erfindungsgemäßen Verfahren ergeben sich insbesondere Vorteile hinsichtlich der Krankosten. So wird ein leistungsfähiger hoher Kran erst zum Ende der Turmmontage für relativ kurze Zeit, nämlich für das Montieren der oberen Stahlturmsektionen benötigt. Beim Montieren und Errichten der Turmsektionen aus Sektionssegmenten ist aufgrund der gegenüber einer kompletten Turmsektion deutlich leichteren Sektionssegmente der Einsatz eines weniger leistungsfähigen und damit kostengünstigeren Krans möglich.

### Ausführung der Erfindung

Nachstehend ist ein Ausführungsbeispiel des Systems gemäß der Erfindung unter Bezugnahme auf die beigefügten Zeichnungen beschrieben, in denen zeigt die
- Fig. 1: eine perspektivische Gesamtansicht einer Turmsektion eines Windenergieanlagenturms,
- Fig. 2: eine Perspektivansicht einer ersten Montagephase mit einem Sektionssegment,
- Fig. 3: eine Perspektivansicht einer zweiten Montagephase mit dem ersten und einem zweiten Sektionssegment,
- Fig. 4: eine Perspektivansicht einer dritten Montagephase mit dem ersten und dem zweiten Sektionssegment,
- Fig. 5: eine Perspektivansicht einer vierten Montagephase mit dem ersten und dem zweiten Sektionssegment,
- Fig. 6: eine Perspektivansicht einer fünften Montagephase mit den ersten beiden Sektionssegmenten und einem dritten Sektionssegment,
- Fig. 7: eine Perspektivansicht einer sechsten Montagephase mit drei verbundenen Sektionssegmenten,
- Fig. 8: eine Perspektivansicht eines Rollenlagerbocks,
- Fig. 9: eine Perspektivansicht einer Führungsplatte,
- Fig. 10: eine Perspektivansicht einer längenveränderbaren Strebe,
- Fig. 11: eine Perspektivansicht eines längenveränderbaren Stützmittels,
- Fig. 12: eine Ansicht auf die Ringflansche des ersten und zweiten Sektionssegments in einer zweiten Montagephase gemäß Fig. 3,
- Fig. 12A: eine Ansicht eines Details aus Fig. 12 und
- Fig. 12B: eine Perspektivansicht zu Fig. 12A.

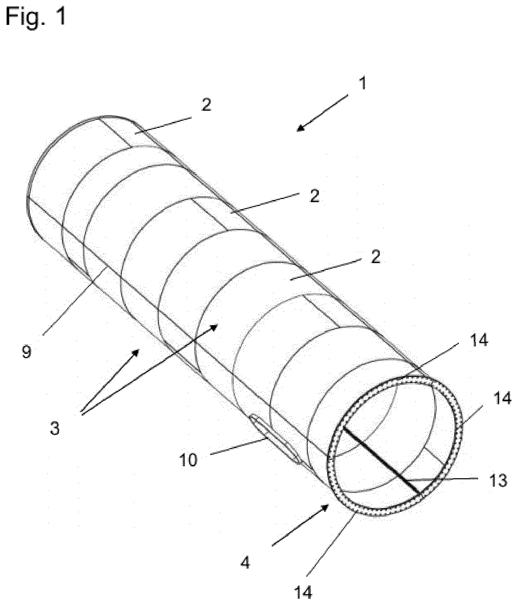

Fig. 1 zeigt eine untere Turmsektion 1 mit einer Turmzugangstüröffnung 10. Die Turmsektion 1 umfasst eine Anzahl von Sektionsabschnitten 2, die in Fachkreisen auch als "Schüsse" oder "cans" bezeichnet werden. Die Sektionsabschnitte 2 weisen vom Herstellungsprozess regelmäßig eine Längsschweißnaht auf. Weitere Turmsektionen 1 sind, ohne die Turmzugangstüröffnung 10, entsprechend aufgebaut, wobei die Anzahl der Sektionsabschnitte 2 variieren kann. Im gezeigten Ausführungsbeispiel weist die Turmsektion 1 insgesamt neun Sektionsabschnitte 2 auf, welche an ihren Stirnseiten miteinander verschweißt sind. Die freien Stirnseiten der äußeren Sektionsabschnitte 2 einer Sektion sind jeweils mit einem Ringflansch 4 verschweißt. Es ist bekannt, anstelle geschlossener Ringflansche einzelne Ringflanschsegmente 14 an die freien Stirnseiten der äußeren Sektionsabschnitte 2 einer Turmsektion 1 anzuschweißen. Die Fig. 1 zeigt ferner ein erstes Längsprofil 13 etwa in der 5-Uhr-Position, welches sich an der Innenseite der Wandung der Turmsektion 1 parallel zu deren Mittelachse erstreckt und mit der Wandung verschweißt ist. Neben dem gezeigten Längsprofil 13 weist die Turmsektion 1 zwei weitere, von außen nicht sichtbare Längsprofile 13 auf, die jeweils um 120° versetzt in der Rohrwandung angeordnet sind. In einem nachfolgenden Herstellungsschritt wird die Turmsektion 1 entlang einer ersten, zweiten und dritten geplanten Trennlinie 9 in drei Sektionssegmente 3 geteilt, wobei die geplanten Trennlinien 9 jeweils mit den Längsprofilen 13 zusammenfallen. Mit anderen Worten erfolgt der jeweilige Längsschnitt durch das Längsprofil 13 oder zwischen einem Paar von einzelnen Längsflanschen, so dass die Sektionssegmente 3 nach dem Transport zum Montageort dort wieder über das Längsprofil 13 oder das Paar von einzelnen Längsflanschen miteinander verbunden werden können.

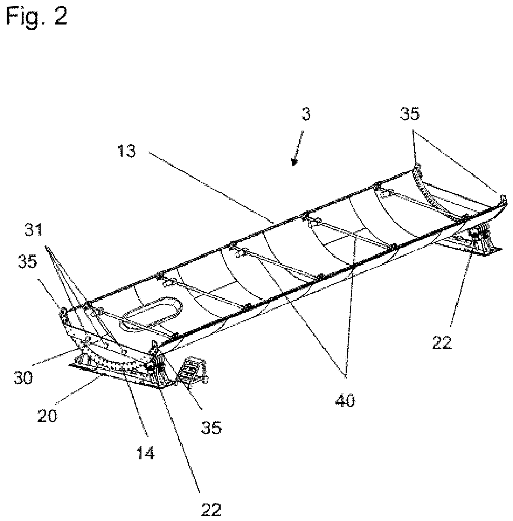

Die Fig. 2 zeigt eine Perspektivansicht einer ersten Montagephase mit einem ersten Sektionssegment 3, das auf zwei Montageböcken 20 mit der offenen, konkaven Seite nach oben abgelegt ist, wobei der Abstand der Montageböcke 20 im Wesentlichen dem Abstand der stirnseitigen Ringflanschsegmente 14 entspricht. Wie die Fig. 2 weiter erkennen lässt, sind fünf längenveränderbare Streben 40 an den gegenüberliegenden Längsprofilen 13 des Sektionssegments 3 gehaltert und derart eingestellt, dass der Abstand der Längsprofile 13 einem vorbestimmten Maß entspricht, sodass die Längsprofile 13 mit hoher Genauigkeit parallel verlaufen. Die Transporttraversen 30 bleiben dabei zur Unterstützung im Sinne einer guten Formstabilität weiterhin montiert. Die Transporttraverse 30 besteht im Ausführungsbeispiel im Wesentlichen aus einer trapezförmigen Platte und drei pollerförmigen Zapfen 31, wobei die Platte vier Durchgangsbohrungen aufweist. Die Zapfen 31 haben einen ersten zylinderförmigen Abschnitt mit einem ersten Durchmesser und einen zweiten zylinderförmigen Abschnitt mit einem größeren zweiten Durchmesser, der die Transporttraverse 30 im eingehängten Zustand gegen ein axiales Verrutschen sichert. Die für eine Verbindung mit einem Ringflanschsegment 14 vorgesehenen vier Durchgangsbohrungen liegen auf einem Kreisbogen, der mit dem Kreisbogen der Bohrungen des Ringflanschsegments 14 zusammenfällt.

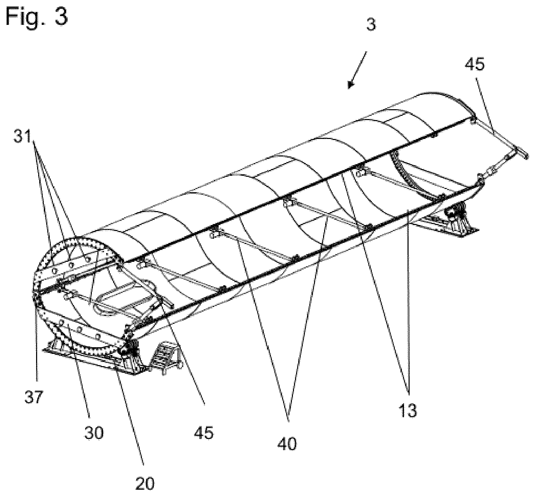

Die Fig. 3 zeigt eine Perspektivansicht einer nachfolgenden zweiten Montagephase mit dem ersten und einem zweiten Sektionssegment 3, welches zuvor mittels eines nicht dargestellten Kranes in im Wesentlichen paralleler Ausrichtung der Längsseiten mit der konvexen Seite nach oben auf das erste Sektionssegment 3 abgesetzt wurde. Mittels der Positionier- und Fixiermittel 37 an einem Ende (in der Figur 3 auf der linken Seite) der stirnseitigen Ringflanschsegmente 14 wurde zuvor eine scharnierartige Verbindung des ersten und des zweiten Sektionssegments 3 hergestellt. Wie die Fig. 3 weiter erkennen lässt, sind auf der gegenüberliegenden Seite klappbare und längenveränderbare Stützmittel 45 vorgesehen und an den Ringflanschsegmenten 14 angeschlagen, wobei die klappbaren und längenveränderbaren Stützmittel 45 dort in einer ca. 60° aufgeklappten Stellung gezeigt sind.

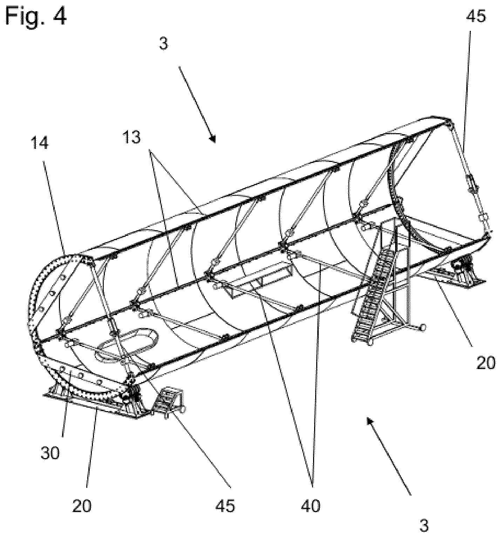

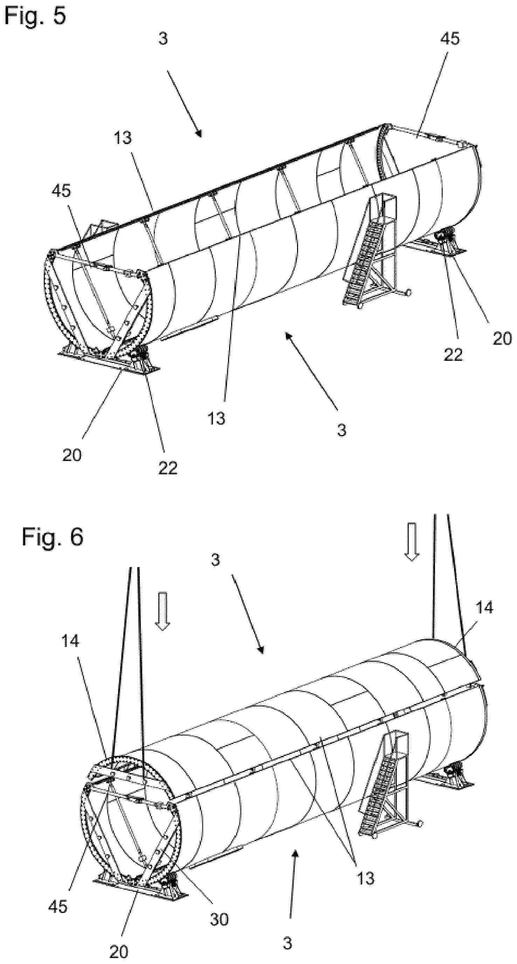

Die Fig. 4 zeigt eine Perspektivansicht einer nachfolgenden dritten Montagephase mit dem ersten und zweiten Sektionssegment, wobei die klappbaren und längenveränderbaren Stützmittel 45 dort in einer vollständig aufgeklappten Stellung, d.h. in gestreckter Stellung, gezeigt sind, sodass eine 2/3-Teilsektion gebildet ist. In der Fig. 5 ist die Konstellation aus Fig. 4 in einer nachfolgenden vierten Montagephase gezeigt, wobei dort die Teilturmsektion mittels der Montageböcke 20 durch die antreibbaren Rollen 22 um 60° gedreht ist, sodass die noch offene Seite der Teilsektion nach oben zeigt.

Die Fig. 6 zeigt eine Perspektivansicht einer nachfolgenden fünften Montagephase, wobei dort die Teilturmsektion mit den verbundenen ersten und zweiten Sektionssegmenten 3 mit der noch offenen Seite nach oben gezeigt ist. Das dritte Sektionssegment 3 ist in waagerechter Ausrichtung mit der konvexen Seite nach oben gerichtet oberhalb der Teilturmsektion dargestellt und noch mit den Seilen der nicht dargestellten Kräne oder anderer Hubmittel verbunden. Durch die Pfeile ist angedeutet, dass das dritte Sektionssegment 3 auf die Teilturmsektion abgesenkt wird.

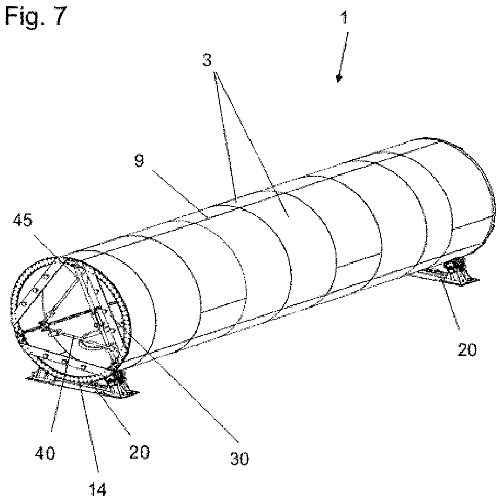

Die Fig. 7 zeigt schließlich eine Perspektivansicht einer nachfolgenden sechsten Montagephase, wobei dort die Turmsektion 1 mit den drei Sektionssegmenten 3 fertiggestellt ist.

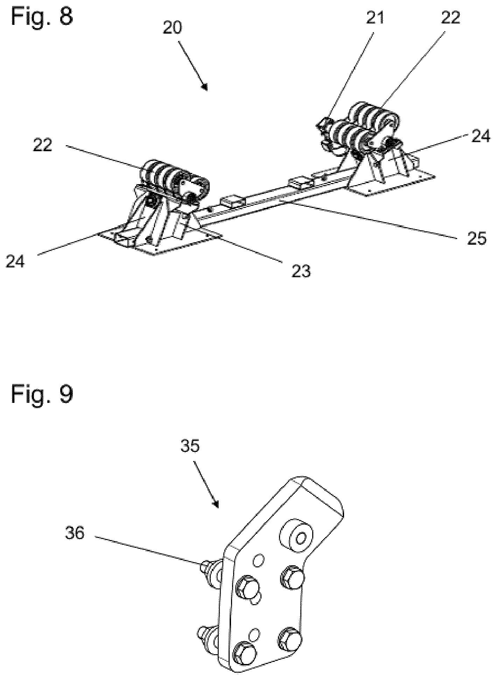

Die Fig. 8 zeigt eine Perspektivansicht eines Rollenlagerbocks 20. Der Rollenlagerbock 20 umfasst im Ausführungsbeispiel zwei Stützböcke 24, die durch einen Querbalken 25 verbunden sind, und vier Rollensätze, die jeweils vier Rollen 22 aufweisen. Die Rollen 22 eines Rollensatzes sind auf einer gemeinsamen Welle gelagert und durch einen Rollenantrieb 21, der insbesondere einen Getriebemotor und vorzugsweise einen Positionssensor umfasst, gemeinsam antreibbar. Die Rollen 22 eines weiteren Rollensatzes sind auf einer gemeinsamen Welle oder Achse frei drehbar an jeweils einem Stützbock 24 gelagert. An jedem Rollenlagerbock 20 ist zumindest ein Rollensatz 20 mittels eines Schwenkantriebs 23 schwenkbar ausgeführt, wodurch sich die Auflagetangenten der Rollen 22 an verschiedene Radien der Turmsektionen 1 anpassen lassen. Im Ausführungsbeispiel ist als Schwenkantrieb 23 ein Elektro- oder Hydraulikmotor vorgesehen.

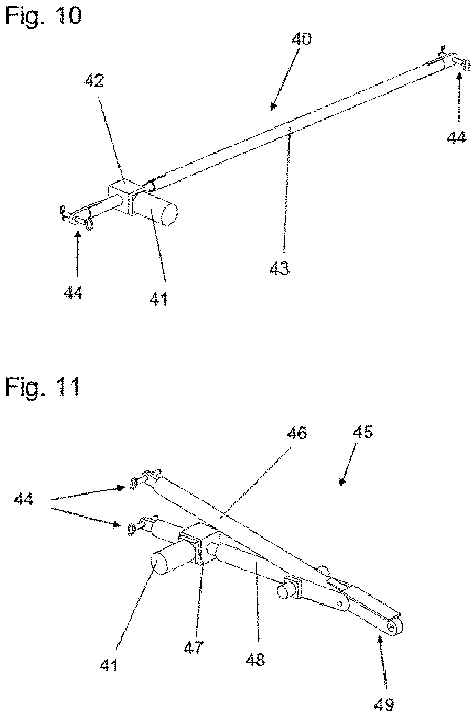

Die Fig. 9 zeigt eine Perspektivansicht einer Führungsplatte 35, welche Durchgangsbohrungen für Anschlagschrauben 36 zum Verbinden mit einem Ringflanschsegment 14 aufweist. Wie die Fig. 9 weiter erkennen lässt, weist die Führungsplatte 35 einen Anschlagzapfen für eine Verbindung mit einem Stützmittel 45 auf, siehe Figur 11.

Die Fig. 10 zeigt eine Perspektivansicht einer Strebe 40, welche im Ausführungsbeispiel als längenveränderbare Spann- und Stützstange ausgebildet ist. Wie der Fig. 10 zu entnehmen ist, weist die Strebe 40 einen Linearantrieb auf, der einen Motor 41, ein Getriebe 42 und eine nicht dargestellte Gewindespindel umfasst. Die Gewindespindel ist in einem Führungsrohr 43 geführt und gelagert. An ihren distalen Enden weist die Strebe 40 jeweils eine Durchgangsbohrung zum Anschluss beispielsweise einer Führungsplatte 35 mittels eines Splintbolzens 44 auf.

Die Fig. 11 zeigt eine Perspektivansicht eines Stützmittels 45,welches im Ausführungsbeispiel als klappbares und längenveränderbares Stützmittel 45 ausgebildet ist. Wie der Fig. 11 zu entnehmen ist, weist das Stützmittel 45 einen Linearantrieb auf, der einen Motor 41, ein Getriebe 47 und eine nicht dargestellte Gewindespindel umfasst. Die Gewindespindel ist in einem Führungsrohr 48 geführt und gelagert. An seinen distalen Enden weist das Stützmittel 45 wiederum jeweils eine Durchgangsbohrung zum Anschluss einer Führungsplatte 35 mittels eines Splintbolzens 44 auf.

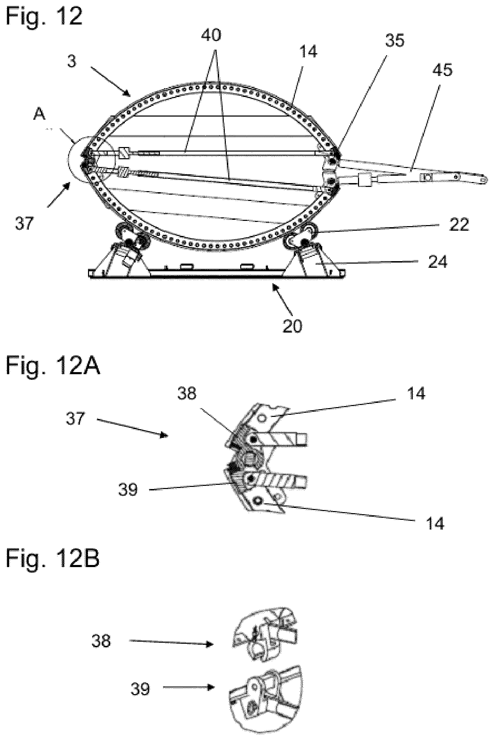

Die Fig. 12 zeigt eine Ansicht auf die stirnseitigen Ringflanschsegmente 14 des ersten und des zweiten Sektionssegments 3, letzteres wurde zuvor mittels eines nicht dargestellten Kranes in waagerechter Ausrichtung mit der konvexen Seite nach oben auf das erste Sektionssegment 3 einseitig abgesetzt und über die Positionier- und Fixiermittel 37 verbunden. Mittels der Positionier- und Fixiermittel 37 an einem Ende (in der Figur 3 und 12 auf der linken Seite) der stirnseitigen Ringflanschsegmente 14 wurde eine scharnierartige Verbindung zwischen dem ersten und dem zweiten Sektionssegment 3 hergestellt. Wie die Fig. 12 weiter erkennen lässt, sind auf der gegenüberliegenden Seite klappbare und längenveränderbare Stützmittel 45 vorgesehen und an den Ringflanschsegmenten 14 angeschlagen, wobei die klappbaren und längenveränderbaren Stützmittel 45 dort in einer ca. 5° aufgeklappten Stellung gezeigt sind.

Die Fig. 12A zeigt einen Ausschnitt A in vergrößerter Darstellung des Positionier- und Fixiermittels 37 in gefügter Stellung. Die Fig. 12B zeigt eine perspektivische Ansicht des Positionier- und Fixiermittels 37 in vergrößerter Darstellung in ungefügter Stellung. Wie die Fig. 12A und Fig. 12B erkennen lassen, besteht das Positionier- und Fixiermittel 37 insbesondere aus einem Gabelelement 38 und einem Stegelement 39, die jeweils mit einem Sektionssegment 3 kraftschlüssig und/oder formschlüssig verbindbar sind, wobei das Gabelelement 38 eine Bohrung mit einem Schlitz und das Stegsegment 39 einen Steg aufweist und wobei die Breite des Schlitzes breiter als die Breite des Steges und schmaler als die Höhe des Steges ist.

### Bezugszeichenliste

- 1: Turmsektion
- 2: Sektionsabschnitt
- 3: Sektionssegment
- 4: Ringflansch
- 9: Trennlinie
- 10: Turmzugangstüröffnung
- 13: Längsprofil
- 14: Ringflanschsegment
- 20: Montagebock
- 21: Rollenantrieb
- 22: Rollen
- 23: Schwenkantrieb
- 24: Stützbock
- 25: Querbalken
- 30: Transporttraverse
- 31: Zapfen
- 35: Führungsplatte
- 36: Anschlagschrauben
- 37: Positionier- und Fixiermittel
- 38: Gabelelement
- 39: Stegelement
- 40: Strebe
- 41: Motor
- 42: Getriebe
- 43: Führungsrohr
- 44: Splintbolzen
- 45: Stützmittel
- 46: Stützrohr
- 47: Getriebe
- 48: Führungsrohr
- 49: Scharniergelenk

## Patentansprüche

1. Verfahren zum Montieren in im Wesentlichen horizontaler Ausrichtung einer längsgeteilten Turmsektion (1) für einen Turm einer Windenergieanlage, welche aus wenigstens drei Sektionssegmenten (3) gebildet wird, jeweils umfassend zwei stirnseitige Ringflanschsegmente (14) und zwei Längsprofile (13) an den Längsseiten zum Verbinden benachbarter Sektionssegmente (3) mit den Schritten:
a) Bereitstellen von wenigstens zwei Montageböcken (20), die jeweils wenigstens eine antreibbare Rolle (22) aufweisen, Bereitstellen einer Mehrzahl von längenveränderbaren Streben (40) und Stützmitteln (45) sowie Bereitstellen einer Mehrzahl von Sektionssegmenten (3),
b) Positionieren und paralleles Ausrichten der Montageböcke (20) derart, dass der Abstand der Montageböcke (20) mit dem Abstand der stirnseitigen Ringflanschsegmente (14) eines Sektionssegments (3) korrespondiert,
c) Verbringen des ersten Sektionssegments (3) mit einer konvexen Seite nach unten gerichtet von einem Lagerplatz oder einem Transportfahrzeug auf die Montageböcke (20) mittels wenigstens eines Hubmittels,
d) Montieren von Führungsplatten (35) an den Ringflanschsegmenten (14) des ersten Sektionssegments (3),
e) Verbringen des zweiten Sektionssegments (3) mit einer konvexen Seite nach oben gerichtet von einem Lagerplatz oder einem Transportfahrzeug mittels des Hubmittels oder der Hubmittel oberhalb des ersten Sektionssegments (3),
f) Absenken und Einfädeln des zweiten Sektionssegments (3) zwischen die Führungsplatten (35) des ersten Sektionssegments (3),
g) weiteres Absenken des zweiten Sektionssegments (3) und Montieren von Positionier- und Fixiermitteln (37) an einer ersten Längsseite des zweiten Sektionssegments in Positionier- und Fixiermittel (37) der benachbarten Längsseite des ersten Sektionssegments (3),
h) Anschlagen jeweils eines längenveränderbaren und klappbaren Stützmittels (45) in zusammengeklappter Stellung an der den Positionier- und Fixiermitteln (37) gegenüberliegenden zweiten Längsseite des ersten und des zweiten Sektionssegments (3),
i) Anheben der zweiten Längsseite des zweiten Sektionssegments (3) und Ausklappen der längenveränderbaren und klappbaren Stützmittel (45) bis in eine Einraststellung,
j) Drehen der antreibbaren Rollen (22) der Montageböcke (20), bis die zweiten Längsseiten des ersten und des zweiten Sektionssegments (3) in einer horizontalen Ebene liegen und eine nach oben offene Teilsektion bilden,
k) Verbinden der Längsprofile (13) der ersten Längsseite des ersten Sektionssegments (3) und der Längsprofile (13) der ersten Längsseite des zweiten Sektionssegments (3),
l) Verbringen des dritten Sektionssegments (3) mit einer konvexen Seite nach oben gerichtet von einem Lagerplatz oder einem Transportfahrzeug mittels des Hubmittels oder der Hubmittel oberhalb der nach oben offenen Teilsektion,
m) Absenken und Einfädeln des dritten Sektionssegments (3) zwischen die Führungsplatten (35) des ersten Sektionssegments (3) und des zweiten Sektionssegments (3),
n) weiteres Absenken des dritten Sektionssegments (3) und Montieren der Positionier- und Fixiermittel (37) an beiden Längsseiten des dritten Sektionssegments in die Positionier- und Fixiermittel (37) der benachbarten Längsseite des ersten und des zweiten Sektionssegments,
o) Sichern der Positionier- und Fixiermittel (37) und
p) Verbinden der Längsprofile (13) des dritten Sektionssegments (3) mit den Längsprofilen (13) der zweiten Längsseiten des ersten und des zweiten Sektionssegments(3).

2. Verfahren nach Anspruch 1 mit den zusätzlichen Schritten:
Montieren und Einstellen der längenveränderbaren Streben (40) an direkt gegenüberliegenden Längsprofilen (13) des ersten Sektionssegments (3), des zweiten Sektionssegments (3) und des dritten oder weiteren Sektionssegments (3), derart, dass der Abstand der jeweiligen Längsprofile (13) einem vorbestimmten Maß entspricht.

3. Verfahren nach Anspruch 2 mit den zusätzlichen Schritten:
Eingeben und/oder Abrufen von für den vorbestimmten Abstand relevanten Parameterwerten an einem lokalen Steuer- und/oder Regelgerät der oder jeder längenveränderbaren Strebe (40) und motorisches Einstellen des vorbestimmten Abstands der Längsprofile (13) mittels des jeweiligen Antriebs.

4. Verfahren nach Anspruch 3 mit den zusätzlichen Schritten:
- Eingeben und/oder Abrufen der für das Anheben und/oder das Ausklappen und/oder den vorbestimmten Abstand relevanten Parameterwerten der oder jeder längenveränderbaren Strebe (40) an einer zentralen Bedien- und Anzeigeeinheit einer zentralen Steuerungseinheit,
- Übertragen der Daten von der zentralen Steuerungseinheit an die lokalen Steuer- und/oder Regelgeräte der längenveränderbaren Streben (40) und
- simultanes motorisches Einstellen der vorbestimmten Abstände der Längsprofile (13) mittels der längenveränderbaren Streben (40).

5. Verfahren nach Anspruch 1, wobei der Schritt "Anheben der zweiten Längsseite des zweiten Sektionssegments und gleichzeitiges Ausklappen der klapp- und längenveränderbaren Stützmittel (45)" die zusätzlichen Schritte umfasst:
- Eingeben und/oder Abrufen der für das Anheben und/oder das Ausklappen und/oder den vorbestimmten Abstand relevanten Parameterwerte der klapp- und längenveränderbaren Stützmittel (45) an einer zentralen Bedien- und Anzeigeeinheit einer zentralen Steuerungseinheit,
- drahtloses Übertragen der Daten von der zentralen Steuerungseinheit an die lokalen Steuer- und/oder Regelgeräte der klappbaren und längenveränderbaren Stützmittel (45) und
- simultanes, motorisches Anheben und/oder Ausklappen und/oder Einstellen der klappbaren und längenveränderbaren Stützmittel (45).

6. Verfahren nach Anspruch 5, **dadurch gekennzeichnet, dass** der Schritt "Anheben der zweiten Längsseite des zweiten Sektionssegments (3) und gleichzeitiges Ausklappen der klapp- und längenveränderbaren Stützmittel (45) bis in eine Einraststellung" durch das oder die Hubmittel und/oder durch eigene Antriebe der klapp- und längenveränderbaren Stützmittel (45) erfolgt.

7. Verfahren nach einem der Ansprüche 1 bis 6 mit den weiteren Schritten,
- Demontieren der Führungsplatten (35),
- Demontieren der längenveränderbaren und klappbaren Stützmittel (45),
- Demontieren der längenveränderbaren Streben (40) und
- Transportieren der fertiggestellten Turmsektion (1) zum einem Errichtungs- oder Lagerplatz.

8. System zum Montieren einer längsgeteilten Turmsektion (1) für einen Turm einer Windenergieanlage, welche aus wenigstens zwei Sektionssegmenten (3) gebildet wird oder ist, umfassend
- wenigstens zwei Montageböcke (20), wobei die Montageböcke (20) jeweils einen mechanischen, elektrischen oder hydraulischen Rollenantrieb (21) zum Antreiben wenigstens einer Rolle (22) aufweisen,
- wenigstens zwei längenveränderbare Streben (40), die mit einem Sektionssegment (3) verbindbar sind, wobei die wenigstens zwei längenveränderbaren Streben (40) jeweils einen mechanischen und/oder elektrischen Antrieb zum Variieren der wirksamen Länge der Streben (40) aufweisen,
- wenigstens zwei temporäre Stützmittel (45) zwischen zwei Sektionssegmenten (3), wobei die wenigstens zwei Stützmittel (45) jeweils einen Antrieb zum Variieren der wirksamen Länge der Stützmittel (45) aufweisen, und
- wenigstens vier Führungsplatten (35) und wenigstens zwei Positionier- und Fixiermittel (37) zum Herstellen einer scharnierartigen Verbindung zwischen zwei Sektionssegmenten (3).

9. System nach Anspruch 8, **dadurch gekennzeichnet, dass**
jedes Stützmittel (45) zwei Abschnitte umfasst, die durch ein Scharniergelenk (49) verbunden sind, wobei der erste Abschnitt als Stützrohr (46) und der zweite Abschnitt als Führungsrohr (48) für den Antrieb ausgebildet ist.

10. System nach Anspruch 9, **dadurch gekennzeichnet, dass**
die Antriebe der längenveränderbaren Streben (40) und/oder Stützmittel (45) jeweils einen Motor (41), ein Getriebe (42, 47), eine Gewindespindel und wenigstens einen Sensor umfassen.

11. System nach Anspruch 8, 9 oder 10, **dadurch gekennzeichnet, dass**
die Antriebe der längenveränderbaren Streben (40) und/oder Stützmittel (45) jeweils ein Steuer- und/oder Regelgerät aufweisen, das mit einer Steuerungseinheit verbindbar ist.

12. System nach Anspruch 11, **dadurch gekennzeichnet, dass**
die Steuerungseinheit eine Bedien- und Anzeigeeinheit aufweist und/oder mit einer Bedien- und Anzeigeeinheit verbindbar ist und die Steuerungseinheit in Wirkverbindung mit den Steuer- und/oder Regelgeräten steht, um wenigstens zwei längenveränderbare Streben (40) und/oder Stützmittel (45) synchron einzustellen.

13. System nach Anspruch 8, **dadurch gekennzeichnet, dass**
jeder Montagebock (20) wenigstens zwei Rollensätze mit jeweils wenigstens zwei Rollen (22) umfasst, wobei zumindest eine Achse oder Welle eines Rollensatzes schwenkbar ausgeführt ist, sodass dessen Abstand zu einer parallelen zweiten Achse oder Welle eines zweiten Rollensatzes veränderbar ist.

14. System nach Anspruch 8, **dadurch gekennzeichnet, dass**
das Positionier- und Fixiermittel (37) ein Gabelelement (38) und ein Stegelement (39) umfasst, wobei das Gabelelement (38) eine Bohrung mit einem Schlitz und das Stegelement (39) einen Steg aufweist und die Breite des Schlitzes größer als die Breite und kleiner als die Höhe des Stegs ist und die Bohrung des Gabelelements (38) einen größeren Durchmesser aufweist als die Höhe des Stegs des Stegelements (39).
